# EUROPEAN PATENT APPLICATION

(11) **EP 2 667 442 A1**
(43) Date of publication of application: **27.11.2013**
(21) Application number: 11856270.1
(22) Date of filing: 21.01.2011
(51) Int. Cl.: H01M 8/24, H01M 8/02, H01M 8/12

(54) **SOLID OXIDE FEUL CELL STACK**

(71) Applicant: Ningbo Institute Of Material Technology And Engineering Chinese Academy of Sciences, Ningbo, Zhejiang 315201 (CN)
(72) Inventor: WANG, Weiguo, Ningbo Zhejiang 315201 (CN); GUAN, Wanbing, Ningbo Zhejiang 315201 (CN); ZHAI, Huijuan, Ningbo Zhejiang 315201 (CN); SHEN, Shengcheng, Ningbo Zhejiang 315201 (CN); JIN, Le, Ningbo Zhejiang 315201 (CN); ZHANG, Qingsheng, Ningbo Zhejiang 315201 (CN); KE, Rui, Ningbo Zhejiang 315201 (CN)
(74) Representative: Jansen, Cornelis Marinus
(86) International application number: PCT/CN2011/070472
(87) International publication number: WO 2012/097521

(57) **Abstract**

The invention provides a solid oxide fuel cell stack, which comprises an upper current collector plate (1), a lower current collector plate (2) and a stack structure (3) accommodated between the upper current collector plate (1) and the lower current collector plate (2), wherein the stack structure (3) includes at least two connectors (11) and a cell plate (12) disposed between the two adjacent connectors (11) which have an anode side and a cathode side. An oxidant gas seal member (13) is provided at the anode side of the connector (11), and a fuel gas seal member (14) is provided at the cathode side of the connector (11). A hermetic oxidant gas supply passage, a hermetic fuel gas supply passage, a hermetic fuel gas discharge passage and open oxidant gas discharge passages are set in the stack structure (3). Compared with the prior art, the inner gas pressure difference is smaller, and the flow is smoother due to the open oxidant gas passages, thereby effectively solving the problem of the mutual leakage between fuel and oxidant gas, increasing the seal reliability of the stack, and improving the stack manufacturing yield and the stability of operation performance.

## Description

### FIELD OF THE INVENTION

The present application relates to the solid oxide fuel cell, and particularly, to a solid oxide fuel cell stack.

### BACKGROUND OF THE INVENTION

The solid oxide fuel cell (SOFC) which belongs to the third generation of the fuel cell is an all-solid-state chemical power generating device for converting chemical energy stored in the fuel and the oxidant into electrical energy efficiently and environment-friendly at a medium or high temperature. The solid oxide fuel cell is generally divided into two types: one is the cylindrical type solid oxide fuel cell in which the electrode and the solid electrolyte are superposed around a cylindrical surface; and the other is the planar type solid oxide fuel cell in which the solid electrolyte and the electrode are formed in planar shapes.

Compared with the cylindrical type solid oxide fuel cell, the planar type solid oxide full cell has a higher power density per unit volume, and is more applicable to mobile device such as the automobile, and thus the planar type solid oxide full cell has a broad application prospect. The core component of the planar solid oxide fuel cell is the cell stack which has a stack structure including multiple solid oxide fuel cell units.

The stability of the cell stack is a key factor determining whether the whole solid oxide fuel cell system can operate normally. Key factors affecting the stability of the cell stack include the service life of the single cell, the sealing performance of the cell stack, and the current collecting effect of the contact interface between the cell and the connecting member, among which, how to improve the sealing performance of the cell stack is a hot topic in the research of the solid oxide fuel cell currently.

In the prior art, the planar solid oxide fuel cell mainly has two kinds of sealing structures: in the first sealing structure, both the fuel and the oxidant gas are sealed, thereby forming a hermetic structure that allows intersection or convection; while in the second sealing structure, the oxidant gas is completely open, and only the fuel gas is sealed.

For the first sealing structure, the main drawback is that, during the manufacturing of the cell stack, since both the fuel gas and the oxidant gas are in sealed environments, the pressure difference is large, thus the fuel gas and the oxidant gas may be leaked and thus mixed with each other, resulting in more waste cell stacks, which increases the manufacture cost of the cell stack; for the second sealing structure, though the possibility that the mutual leakage between the fuel gas and the oxidant gas at a high temperature may be avoided, in order to ensure that the oxidant gas can be supplied to the cathode of the cell, an additional oxidant gas chamber is required, however, a short circuit may occur between the oxidant gas chamber and the cell stack, resulting in unstable operation of the cell stack.

### SUMMARY OF THE INVENTION

A technical problem to be solved according to the present application is to provide a solid oxide fuel cell stack which, compared with the prior art, not only can avoid the mutual leakage between the fuel gas and the oxidant gas, but also can effectively prevent a short circuit of the cell, thereby ensuring the stable operation of the cell stack.

In view of this, it is provided according to the present application a solid oxide fuel cell stack, including

an upper current collector plate, a lower current collector plate and a stack structure accommodated between the upper current collector plate and the lower current collector plate.

The stack structure includes at least two connecting members and a cell disposed between two adjacent connecting members. Each connecting member has an anode side and a cathode side. An oxidizing gas sealing member is provided at the anode side of the connecting member, and a fuel gas sealing member is provided at the cathode side of the connecting member.

A hermetic oxidizing gas inlet passage, a hermetic fuel gas inlet passage, a hermetic fuel gas outlet passage and an open oxidizing gas outlet passage are provided on the stack structure.

Preferably, each of two sides of the connecting member is provided with protruding points arranged in a dot-matrix manner and a sealing edge disposed around the protruding points.

Preferably, a sealing edge on the cathode side of the connecting member has an opening portion, and the opening portion and the fuel gas sealing member form the open oxidizing gas outlet passage.

Preferably, the hermetic oxidizing gas inlet passage is formed by communicating an oxidizing gas inlet hole provided on the oxidizing gas sealing member, an oxidizing gas inlet hole provided on the cell and an oxidizing gas inlet hole provided on the connecting member.

Preferably, the hermetic fuel gas inlet passage is formed by communicating a fuel gas inlet hole provided on the fuel gas sealing member, a fuel gas inlet hole provided on the cell and a fuel gas inlet hole provided on the connecting member.

Preferably, the fuel gas outlet passage is formed by communicating a fuel gas outlet hole provided on the oxidizing gas sealing member, a fuel gas outlet hole provided on the cell and a fuel gas outlet hole provided on the connecting member.

Preferably, the protruding points arranged in the dot-matrix manner have a height ranged from 0.3mm to 1.0mm.

Preferably, an effective contact area between protruding points arranged in the dot-matrix manner on the connecting member and an element located at the same side of the connecting member as the protruding points occupies 10 to 50 percent of an area of the side of the connecting member.

Preferably, a width of the sealing edge is ranged from 2mm to 15mm.

Preferably, the upper current collector plate, the stack structure and the lower current collector plate are connected via bolt assemblies.

It is provided according to the present application a solid oxide fuel cell stack which includes a hermetic oxidizing gas inlet passage, a hermetic fuel gas inlet passage, a hermetic fuel gas outlet passage and an open oxidizing gas outlet passage. In the cell stack according to the present application, the inlet for the oxidizing gas is hermetic, while the outlet is open. Compared with the prior art in which the inlet and the outlet for the oxidizing gas are hermetic, since the outlet for the oxidizing gas is open, the pressure difference of the gas inside is smaller, and the gas flows more smoothly, which effectively avoids the possibility that the fuel gas and the oxidizing gas being mixed with each other, thereby the operation stability and the output performance of the cell stack are further improved. Compared with the structure in the prior art in which the oxidizing gas is open, no additional oxidizing gas inlet chamber is required in the present application, thereby the short circuit problem of the cell stack or the like is avoided.

### BRIEF DESCRIPTION OF THE DRAWINGS

Figure 1 is a structural schematic view of a first embodiment of a solid oxide fuel cell stack according to the present application after being assembled;

Figure 2 is a structural schematic view of a second embodiment of a solid oxide fuel cell stack according to the present application after being assembled;

Figure 3 is an exploded view of the solid oxide fuel cell stack shown in Figure 1;

Figure 4 is a schematic view of a cathode side of a connecting member in the solid oxide fuel cell stack shown in Figure 3;

Figure 5 is a schematic view of a fuel gas sealing member at the cathode side of the connecting member in Figure 3;

Figure 6 is a schematic view of an anode side of the connecting member in Figure 3;

Figure 7 is a schematic view of an oxidizing gas sealing member at the anode side of the connecting member in Figure 3;

Figure 8 is a schematic view of a nickel foam;

Figure 9 is a schematic view of an anode side of a single cell;

Figure 10 is a schematic view of a cathode side of the single cell shown in Figure 9;

Figure 11 is an I-V diagram showing a testing result of a cell stack according to a second embodiment of the present application;

Figure 12 is an attenuation diagram of a cell stack according to a third embodiment of the present application; and

Figure 13 is an attenuation diagram of a single cell of the cell stack in the third embodiment of the present application.

### DETAILED DESCRIPTION OF THE INVENTION

For further understanding the present application, hereinafter, preferred solutions of the present application will be described in conjunction with the embodiments. It is to be appreciated that, the description is only for further illustrating characteristics and advantages of the present application, but not for limiting claims of the present application.

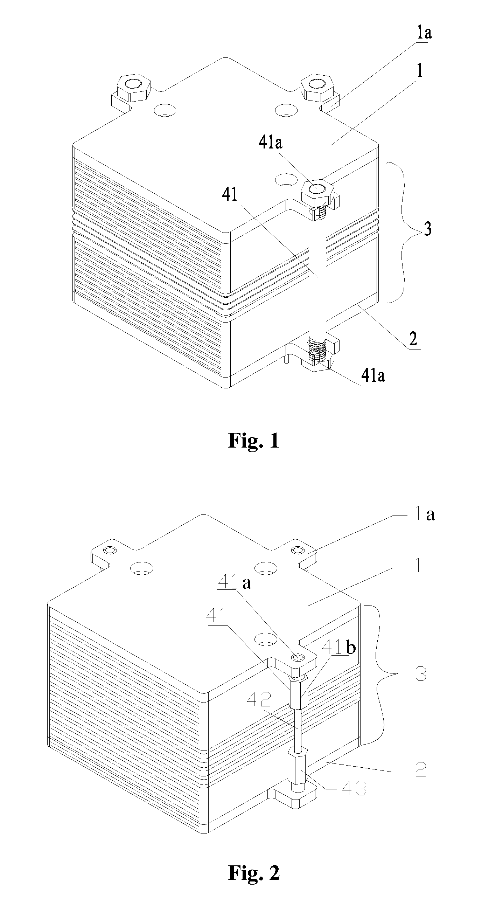

Referring to Figure 1 which is a schematic view of a solid oxide fuel cell stack according to an embodiment of the present application, the solid oxide fuel cell stack includes an upper current collector plate 1, a lower current collector plate 2 and a stack structure 3 between the upper current collector plate and the lower current collector plate. The upper current collector plate 1 and the lower current collector plate 2 are fixedly connected via a screw rod assembly which is preferably of a metal material. In the present embodiment, the screw rod assembly 4 includes a screw rod 41 and two bolts 42. A screw rod supporting portion 1a for locating the screw rod is preformed on each of the four edges of the upper current collector plate, and a screw rod supporting portion is preformed on each of the four edges of the lower current collector plate at a position corresponding to that of the screw rod supporting portion 1a on the upper current collector plate as well. After the screw rod is located on the screw rod supporting portion 1a, bolts are screwed on two ends of the screw rod from the outer side of the upper current collector and the outer side of the lower current collector, respectively. Then the upper current collector plate, the stack structure and the lower current collector plate are pressed and connected by screwing the bolts. In the present application, the screw rod assembly is employed for pressing and connecting the upper current collector plate, the stack structure and the lower current collector plate at normal temperature, which kind of structure is easy to be disassembled and facilitates mass assembling and production.

Referring to Figure 2 which is a schematic view of a solid oxide fuel cell stack according to a second embodiment of the present application. The second embodiment is different from the first embodiment in that the manner for fixedly connecting the upper current collector plate, the lower current collector plate and the stack structure of the cell stack is further improved.

In the present embodiment, the screw rod assembly includes a screw rod 42, a first screw rod fixing member 41 and a second screw rod fixing member 42 which are connected at two ends of the screw rod. The first screw rod fixing member 41 and the second screw rod fixing member 42 are arranged at the inner sides of the upper current collector plate and the lower current collector plate, respectively, such that the upper current collector plate 1, the stack structure 3, and the lower current collector plate 3 are fixedly connected. The two screw rod fixing members 41 and 42 have the same structures which will be explained hereinafter by taking the first screw rod fixing member 41 as an example. The first screw rod fixing member has a screw rod end 41a and a threaded hole end 41b corresponded to the screw rod end. Two ends of the screw rod 42 are cooperated with the threaded hole ends of the two screw rod fixing members, respectively. The screw rod ends of the two screw rod fixing members are rotatedly fixed from the inner sides of the upper current collector plate and the lower current collector plate, respectively. Threaded holes cooperated with the screw rod ends of the two screw rod fixing members are formed on the upper current collector plate and the lower current collector plate, respectively, thereby the upper current collector plate, the lower current collector plate and the stack structure can be fixedly connected by rotating the two screw rod fixing members and the screw rod. Compared with the first embodiment, the advantages of the second embodiment lies is that no bolts are protruded on the outer sides of the upper current collector plate and the lower current collector plate, thus it is more easy to connect cell stacks in series or in parallel.

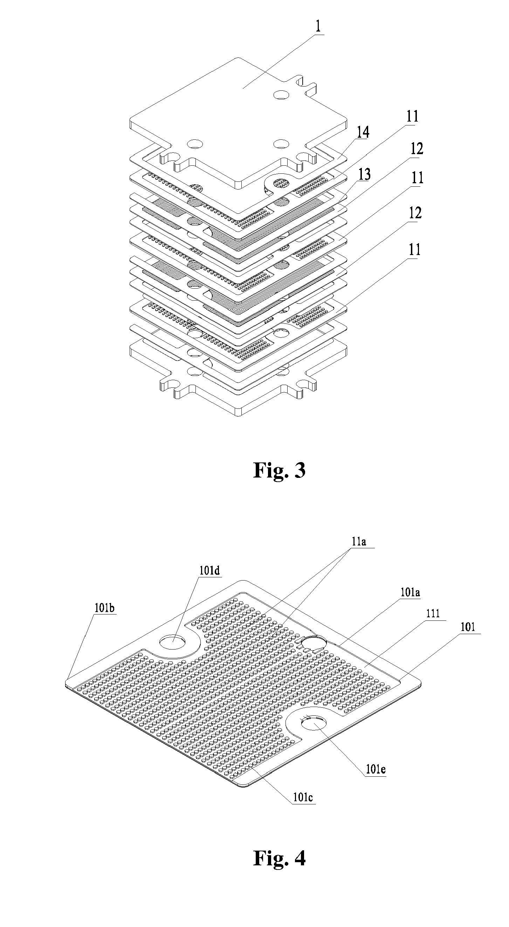

In the second embodiment, the screw rod assembly may be of a metal material or a nonmetal material such as an engineering plastic or a composite material. In cases that the screw rod assembly is of a metal material, it is required to disassemble the screw rod assembly before testing the cell stack at a high temperature; while in cases that the screw rod assembly is of a nonmetal material such as a composite material, it is no need to disassemble the screw rod assembly before testing the cell stack at a high temperature, and thus the operating thereof is more convenient. Referring to Figure 3 which is an exploded schematic view of the solid oxide fuel cell stack shown in Figure 1. The stack structure includes a plurality of connecting members 11, and three connecting members are shown in Figure 3. The connecting members are provided for separating the fuel gas and the oxidizing gas. In the present embodiment, the fuel gas is the hydrogen gas, and the oxidizing gas is the air.

The connecting member may be made of the stainless steel well know by those skilled in the art, for example, Fe-16Cr, Fe-22Cr or the like, and the type may be SUS430, but the present application is not limit to the examples. The number of the connecting members should be at least two, that is, two or more than two. The number of the connecting members may be determined according to the number of the single cells designed. Normally, the number of the connecting members is larger than that of the single cells by one, and each single cell is arranged between two adjacent connecting members. The top end and the bottom end of the stack structure are connecting members, with the top connecting member being in contact with the upper current collector plate, and the bottom connecting member being in contact with the lower current collector plate. The thickness of the connecting member is preferably ranged from 0.8mm to 4mm, more preferably, from 1.0mm to 3mm, still more preferably, from 1.2mm to 2.8mm, and still more preferably, from 1.5mm to 2.5mm.

Still referring to Figure 3, a single cell 12 is arranged between two adjacent connecting members. The connecting member 11 has two primary surfaces, and for the convenience of description, the primary surface of the connecting member facing the cathode side of the single cell is referred to as a cathode side of the connecting member, while the other primary surface of the connecting member opposite to the cathode side is referred to as an anode side of the connecting member. An oxidizing gas sealing member 13 is provided at the anode side of the connecting member, and a fuel gas sealing member 14 is provided at the cathode side of the connecting member.

The oxidizing gas sealing member and the fuel gas sealing member are of the same material, but have different structures (detail description thereof will be given hereinafter). A sealing glass well known by those skilled in the art may be employed, for example, a sealing glass having a general formula A₂O₃-SiO₂-BO as commonly used in the prior art. In the general formula, A denotes element Al, B, La or Te, and B denotes element Mg, Zn, Sr, Ca, or F.

Protruding points arranged in a dot-matrix manner are formed on each of the two primary surfaces, that is, the anode side and the cathode side, of the connecting member. The protruding point may have a cross section of a cylindrical shape, a triangular shape, an oblong shape, a rectangular shape, or a polygonal shape. There is no limitation to the shape of the cross section of the protruding point in the present application.

The protruding points on the connecting member are brought into contact with the cathode of the cell, the nickel foam, the upper current collector plate/ the lower current collector plate, and the like under the action of the screw rod assemblies, thereby achieving the current collecting effect. The protruding points arranged in the dot-matrix manner may be formed by etching or stamping well known by the person skilled in the art, and the spaces among the protruding points act as passages for the fuel gas or the oxidizing gas. The height of the protruding point is preferably ranged from 0.3mm to 1.0mm, and more preferably, from 0.4mm to 0.9mm. The effective contact area between the protruding points and the cathode electrode of the cell, the nickel foam, the upper current collector plate/ the lower current collector plate, or the like under the pressure occupies 10 to 50 percent, preferably 15 to 45 percent, of the area of the connecting member. The protruding point structure according to the present application is easy to be protruded into the current collector layer of the cathode of the cell, thereby the current collecting effect is improved and the output performance of the cell stack is increased.

A sealing edge is formed around the protruding points arranged in the dot-matrix manner on each of the two primary surfaces of the connecting member, so as to achieve a sealing effect after the sealing edges are in contact with sealing members. In the present application, the sealing edge on the anode side of the connecting member and the sealing edge on the cathode side of the connecting member have different structures, which will be described in detail hereinafter.

As shown in Figure 4 which is a structural schematic view of a cathode side of a connecting member. Protruding points 11a arranged in a dot-matrix manner are formed on the cathode side of the connecting member by etching, and a cathode side sealing edge 101 is preformed around the protruding points arranged in the dot-matrix manner. The cathode side sealing edge 101 includes a first portion 101a corresponded to one side of the connecting member, and a second portion 101b and a third portion 101c connected with two ends of the first portion, respectively. The portion opposite to the first portion 101a is open and has an opening portion. That is, the cathode side sealing edge is an open sealing edge. Preferably, the protruding points and the sealing edge are flush with each other. In this way, the protruding points can be maintained in sufficient contact with other elements while achieving a better sealing effect.

A vent groove 111 is formed between the protruding points and the first portion 101a of the sealing edge. A ratio of a width of the vent groove to a diameter of a vent hole is preferably ranged from 1/5 to 1. A depth of the vent groove is corresponded to the height of the protruding point, and preferably is ranged from 0.3mm to 1.0mm. The vent groove acts as a main gas passage for supplying gas to the spaces among the protruding points. The vent hole is a hole formed from a sealing edge on the other side, and is an oxidizing gas vent hole when being formed on the cathode side.

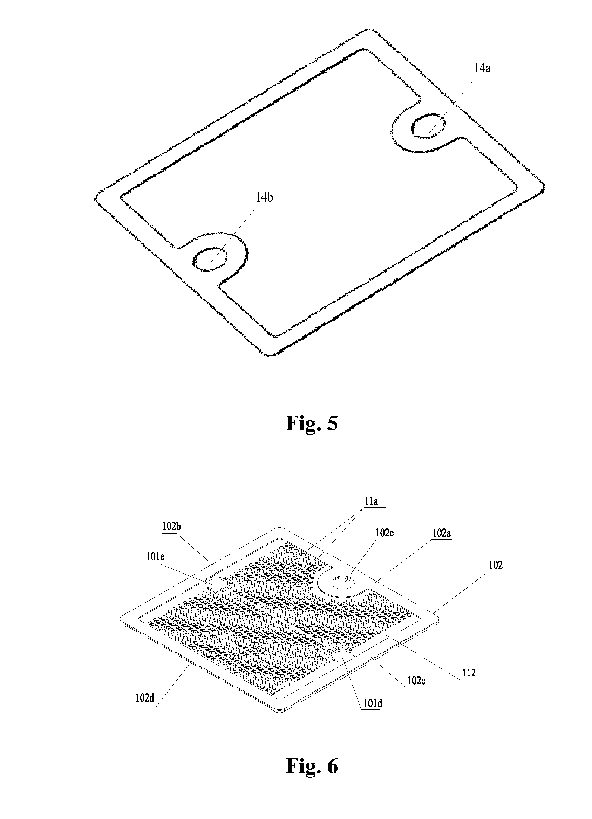

Positions for forming a fuel gas inlet hole and a fuel gas outlet hole are reserved on the second portion 101b and the third portion 101c, respectively. In this way, the fuel gas inlet hole 101d may be formed on the second portion 101b and the fuel gas outlet hole 101e may be formed on the third portion 101b. Reference may be further made to Figure 5 which is a schematic view of a fuel gas sealing member 14. A fuel gas inlet hole 14a and a fuel gas outlet hole 14b are formed on the fuel gas sealing member at positions corresponding to those of the fuel gas inlet hole 101d and the fuel gas outlet hole 101e on the separator, respectively. In this way, after the fuel gas sealing member is abutted against the cathode side sealing edge 101, the fuel gas is sealed outside of the cathode side, and thus is prevented from being mixed into the area. Furthermore, since the cathode side sealing edge 101 is open, after the fuel gas sealing member 101 is abutted thereon, the opening portion will not be sealed, thus the opening portion may serve as an open outlet passage for the oxidizing gas.

As shown in Figure 6 which is a structural schematic view of the anode side of the connecting member. Similar to the cathode side, protruding points 11b arranged in a dot-matrix manner are formed by etching or stamping. An anode side sealing edge 102 is preformed around the protruding points arranged in the dot-matrix manner. The anode side sealing edge 102 includes a fourth portion 102a corresponded to the first portion 101a, a fifth portion 102b and a sixth portion 102c connected with two ends of the fourth portion, and a seventh portion 102d connecting the fifth portion 102b and the sixth portion 102c. Different from the cathode side sealing edge, the anode side sealing edge is a closed sealing edge, and the sealing edge and the protruding points have the same height.

Vent grooves 112 are formed between the protruding points and the fifth portion 102b of the sealing edge as well as between the protruding points and the sixth portion of the sealing edge, and the vent grooves have the same structure as that of the vent groove on the cathode side, and thus description thereof will be omitted. The vent grooves 112 act as main fuel gas passages for supplying fuel gas fed through the fuel gas inlet hole into spaces among the protruding points, or sending fuel gas in the spaces among the protruding points out of the fuel gas outlet hole.

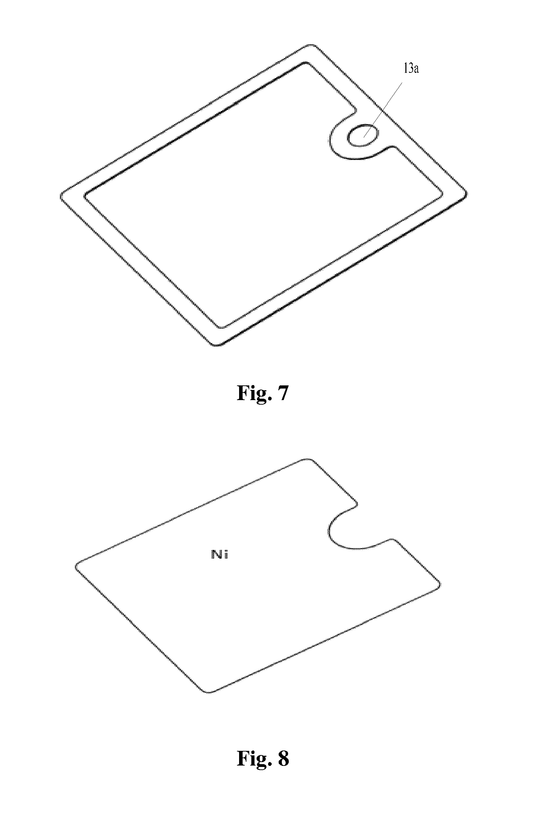

A position for forming an oxidizing gas inlet hole is reserved on the fourth portion 102a, at which position an oxidizing gas inlet hole 102e may be formed. Reference may be further made to Figure 7 which is a schematic view of an oxidizing gas sealing member 13. An oxidizing gas inlet hole 13a is formed on the oxidizing gas sealing member. When the oxidizing gas sealing member is abutted on the anode side sealing edge, the oxidizing gas is sealed from the anode side, and thus is prevented from being mixed into the area. Furthermore, the fuel gas, after supplied from the fuel gas inlet hole 101d, passes through the spaces among the protruding points of the area, and then is exhausted through the fuel gas outlet hole 101e. That is, the fuel gas passage is hermetic.

The width of the above anode side sealing edge or the cathode side sealing edge is preferably ranged from 2mm to 15mm, more preferably from 3mm to 10mm, and still more preferably from 4mm to 9mm.

In the stack structure according to the present embodiment, the protruding points on the cathode side of the top connecting member of the stack structure are in contact with the upper current collector plate. The sealing edge on the cathode side is connected to the upper current collector plate in a sealed way via a fuel gas sealing member therebetween. The protruding points on the anode side of the bottom connecting member of the stack structure are in contact with the lower current collector plate, and the sealing edge on the anode side is connected to the lower current collector plate in a sealed way via an oxidizing gas sealing member therebetween.

According to the present application, in the stack structure, the cathode side of the connecting member is connected to the cathode of the cell in a sealed way via the fuel gas sealing member, and the anode side of the connecting member is connected to the anode of the cell in a sealed way via the oxidizing gas sealing member. A nickel foam is arranged between the anode side of the connecting member and the anode side of the cell, as shown in Figure 8 which is a structural schematic view of the nickel foam, and an oxidizing gas inlet notch is to be formed on the nickel foam.

Further, for assembling the stack structure having the above structure, holes corresponded to the oxidizing gas inlet hole, the fuel gas inlet hole, and the fuel gas outlet hole on the connecting member are to be formed on a single cell, so as to form gas passages. For the single cell, an anode-supported planar solid oxide fuel single cell or an electrolyte-supported solid oxide fuel single cell may be used. The shape of the single cell is not limited, and a square shape is preferred.

The solid oxide fuel cell stack provided according to the present application may be prepared according to the following method including:

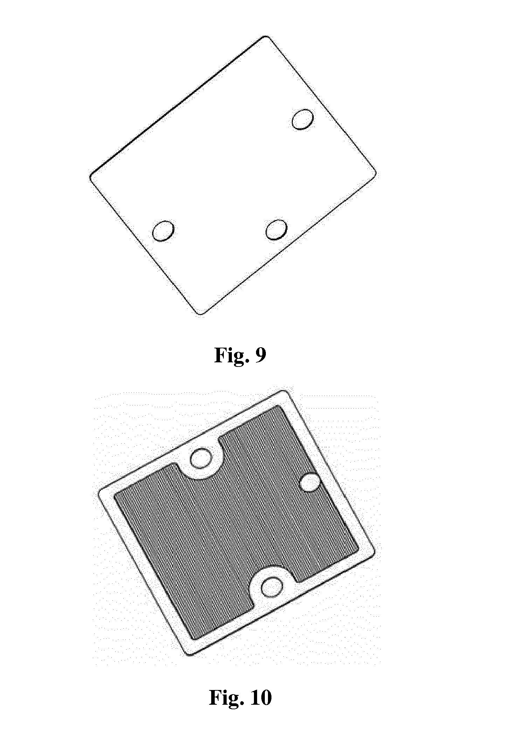

Forming three holes on the single cell preferably by laser cutting, which three holes act as an oxidizing gas inlet hole, a fuel gas inlet hole and a fuel gas outlet hole, respectively. As shown in Figure 9 which is a schematic view of the anode surface of a single cell, and Figure 10 is a schematic view of the cathode surface of the single cell.

Forming three holes on a connecting member, which has protruding points formed by etching or stamping, at positions corresponded to those of the three holes on the single cell. The three holes on the connecting member serve as an oxidizing gas inlet hole, a fuel gas inlet hole and a fuel gas outlet hole, respectively.

Forming a hole on a sealing glass at a position corresponded to that of the oxidizing gas inlet hole on the separator, and the sealing glass serves as an oxidizing gas sealing member; and forming two holes on another sealing glass at positions corresponded to those of the fuel gas inlet hole and the fuel gas outlet hole on the separator, and the sealing glass serves as a fuel gas sealing member;

Forming a notch on a nickel foam at a position corresponded to that of the oxidizing gas inlet hole on the connecting member as an oxidizing gas inlet passage.

Assembling the formed connecting member, single cell, oxidizing gas sealing member, fuel gas sealing member and nickel foam, an upper current collector plate, a lower current collector plate and bolts into a solid oxide fuel cell stack as shown in Figure 1. The number of the single cell may be chosen based on the requirements of the design, which is not limited in the present application. And then, the performance of the cell stack may be tested in the manner well known by those skilled in the art.

Hereinafter, the effects of the present application will be illustrated by way of embodiments. However, the protection scope of the present application is not limited to the following embodiments.

### First Embodiment

Preparing the following elements:

A single cell: preparing an anode-supported single cell with a specification of 10cm x10cm the anode is, the cathode is; and forming an oxidizing gas inlet hole on an edge portion of the single cell by laser cutting, and forming a fuel gas inlet hole and a fuel gas outlet hole at two edge portions perpendicular to the edge portion on which the oxidizing gas inlet hole is located, respectively;

a connecting element: the material thereof is SUS430 and the thickness thereof is 2.5mm; forming circular protruding points arranged in a dot-matrix manner on the anode side and the cathode side of the separator by etching, with the circular protruding points on each side having a height of 0.5mm; and as shown in Figure 4 and Figure 6, forming an anode sealing edge and a cathode sealing edge having a width of 3.5mm, respectively, with the cathode sealing edge has an opening portion.

Forming, by laser cutting, a fuel gas inlet hole, a fuel gas outlet hole and an oxidizing gas inlet hole at positions for the fuel gas inlet hole, the fuel gas outlet hole and the oxidizing gas inlet hole, respectively.

An oxidizing gas sealing member: forming an oxidizing gas inlet hole on a sealing glass Al₂O₃-SiO₂-MgO (type or composition of the sealing glass) at a position corresponded to that of the oxidizing gas inlet hole on the separator.

A fuel gas sealing member: forming a fuel gas inlet hole and a fuel gas outlet hole on another sealing glass Al₂O₃-SiO₂-MgO (type or composition of the sealing glass) at positions corresponded to those of the fuel gas inlet hole and the fuel gas outlet hole on the separator.

A nickel foam: forming an oxidizing gas inlet hole and a fuel gas passage hole;

An upper current collector plate: the material thereof is SUS430. Machining a screw rod assembly for pressing at each of three edges of the upper current collector plate.

A lower current collector plate: the material thereof is SUS430. Machining a screw rod assembly for pressing at each of three edges of the lower current collector plate.

### Second embodiment

Assembling an upper current collector plate, a lower current collector plate and five connecting members, five oxidizing gas sealing members, five fuel gas sealing members, four single cells and four nickel foams into a four unit-cell stack assembly in the following order: the upper current collector plate/the fuel gas sealing member/(the separator/the oxidizing gas sealing member (the nickel foam) /the single cell) x 4/the separator/the oxidizing gas sealing member/the lower current collector plate, and then fixing the upper current collector plate and the lower current collector plate by bolt assemblies.

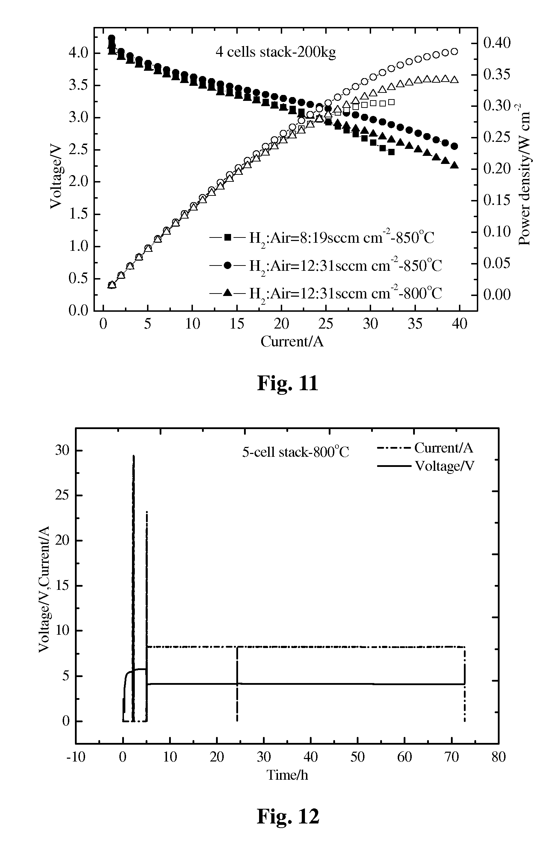

Raising the temperature of the assembled cell stack assembly such that the temperature thereof is raised from the room temperature to 850 degree Celsius after 12 hours. Applying a pressure ranged from 0 to 200kg and testing the performance of the cell stack under different conditions after the cell stack is maintained at the above temperature for 4 hours, and the I-V diagram thereof is shown in Figure 11.

In Figure 11, after the cell stack prepared according to the present embodiment is subject to a 2-hour redox process under the following condition: the temperature is 850 degree Celsius, the pressure is 200kg, and H₂:Air=8:19sccm·cm⁻², it is measured that the largest power at the current of 32A is 79.6W, and correspondingly the largest power density is 0.306W ·cm⁻². When H₂: Air=8:19sccm·cm⁻², it is measured that the largest power at the current of 39A is 100.5W, and correspondingly, the largest power density is 0.385W·cm⁻². The largest power density of the cell stack prepared according to the present embodiment acquired according to the diagram in Figure 11 is 0.427W·cm⁻², and the open circuit voltage of the cell stack is equal to or larger than 4.1V. Thereby the cell stack made according to the present embodiment has a high power density.

Maintaining the gas flow rate H₂:Air=12:31sccm · cm⁻², and lowering the temperature of the cell stack such that it is lowered from 850 degree Celsius to 800 degree Celsius after 50mins, and then the cell stack is maintained at the temperature for 1.5 hours, it is measured that the largest power is 89W when the current is 38A, and correspondingly, the largest power density is 0.342 W cm⁻².

### Second embodiment

Assembling an upper current collector plate, a lower current collector plate and six connecting members, six oxidizing gas sealing members, six fuel gas sealing members, five single cells and five nickel foams into a five-unit cell stack assembly in the following order: the upper current collector plate/the fuel gas sealing member/(the separator/the oxidizing gas sealing member (the nickel foam) /the single cell) x 5/the separator/the oxidizing gas sealing member/the lower current collector plate, and then fixing the upper current collector plate and the lower current collector plate by bolt assemblies.

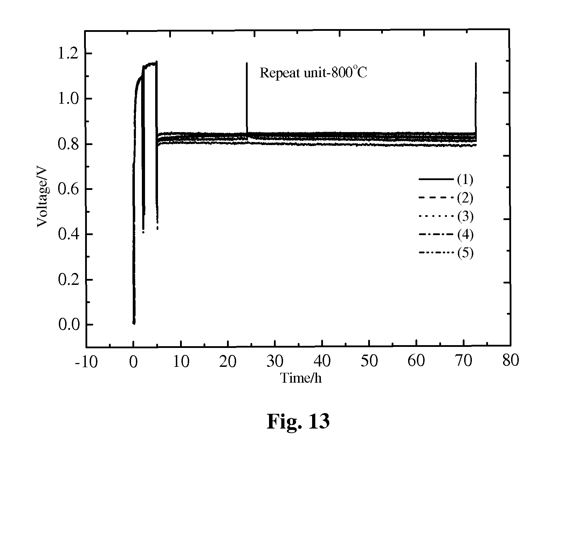

Raising the temperature of the assembled cell stack assembly such that the temperature thereof is raised from the room temperature to 850 degree Celsius after 12 hours, and then maintaining the cell stack at the temperature for 4 hours. Then applying a pressure ranged from 0 to 400kg so as to test the performance of the cell stack and obtain the I-V curve. After then, the cell stack is subject to an attenuation test at a temperature of 800 degree Celsius and a current of 8A, and the results are shown in Figure 12 and Figure 13. Figure 12 shows an attenuation curve of the whole cell stack, and Figure 13 shows an attenuation curve of a single cell in the cell stack. It can be seen from the results of Figure 12 and Figure 13, the cell stack and a single cell stack unit thereof are not attenuated after a 75-hour test, and after the constant-current discharging is stopped, the open circuit voltage of the cell stack reaches 5.7V, and the open circuit voltage of the single cell is more than 1.1V.

The solid oxidant fuel cell according to the present application is described in the above description in detail. Specific examples are employed herein to explain the principle and embodiments of the present application, and the explanation of the embodiments are only for better understanding of the method of the present invention and the idea thereof. It should be noted that, various improvements and modifications may be made by those skilled in the art without departing from the principle of the present application, and these improvements and modifications also fall within the protection scope of the claims of the present application.

## Claims

1. A solid oxide fuel cell stack, comprising
an upper current collector plate, a lower current collector plate and a stack structure accommodated between the upper current collector plate and the lower current collector plate, wherein:
the stack structure comprises at least two connecting members and a cell disposed between two adjacent connecting members, each connecting member has an anode side and a cathode side, and an oxidizing gas sealing member is provided at the anode side of the connecting member, and a fuel gas sealing member is provided at the cathode side of the connecting member; and
a hermetic oxidizing gas inlet passage, a hermetic fuel gas inlet passage, a hermetic fuel gas outlet passage and an open oxidizing gas outlet passage are provided on the stack structure.

2. The solid oxide fuel cell stack according to claim 1, wherein each of two sides of the connecting member is provided with protruding points arranged in a dot-matrix manner and a sealing edge disposed around the protruding points.

3. The solid oxide fuel cell stack according to claim 1, wherein a sealing edge on the cathode side of the connecting member has an opening portion, and the opening portion and the fuel gas sealing member form the open oxidizing gas outlet passage.

4. The solid oxide fuel cell stack according to claim 1, wherein the hermetic oxidizing gas inlet passage is formed by communicating an oxidizing gas inlet hole provided on the oxidizing gas sealing member, an oxidizing gas inlet hole provided on the cell and an oxidizing gas inlet hole provided on the connecting member.

5. The solid oxide fuel cell stack according to claim 1, wherein the hermetic fuel gas inlet passage is formed by communicating a fuel gas inlet hole provided on the fuel gas sealing member, a fuel gas inlet hole provided on the cell and a fuel gas inlet hole provided on the connecting member.

6. The solid oxide fuel cell stack according to claim 1, wherein the fuel gas outlet passage is formed by communicating a fuel gas outlet hole provided on the oxidizing gas sealing member, a fuel gas outlet hole provided on the cell and a fuel gas outlet hole provided on the connecting member.

7. The solid oxide fuel cell stack according to any one of claims 1 to 6, wherein the protruding points arranged in the dot-matrix manner have a height ranged from 0.3mm to 1.0mm.

8. The solid oxide fuel cell stack according to claim 7, wherein an effective contact area between protruding points arranged in the dot-matrix manner on the connecting member and an element located at the same side of the connecting member as the protruding points occupies 10 to 50 percent of an area of the side of the connecting member.

9. The solid oxide fuel cell stack according to claim 7, wherein a width of the sealing edge is ranged from 2mm to 15mm.

10. The solid oxide fuel cell stack according to claim 9, wherein the upper current collector plate, the stack structure and the lower current collector plate are connected via bolt assemblies.
